# EUROPÄISCHE PATENTSCHRIFT

(11) **EP 1 176 691 B1**
(45) Veröffentlichungstag und Bekanntmachung des Hinweises auf die Patenterteilung: **22.09.2010**
(21) Anmeldenummer: 01117149.3
(22) Anmeldetag: 13.07.2001
(51) Int. Cl.: H02J 7/00

(54) **Autotelefonsystem mit schnurlosem Bedienhörer und Verfahren zum Laden des Akkumulators des Bedienhörers**
Car telephone system with cordless handset and method for charging the battery of the handset
Système mobile de téléphonie avec écouteur sans fils et procédé pour charger la batterie de l'écouteur

(30) Priorität: 25.07.2000 DE 10036150
(43) Veröffentlichungstag der Anmeldung: 30.01.2002
(73) Patentinhaber: Palm, Inc., Sunnyvale, CA 94085-2801 (US)
(72) Erfinder: Fuchsberger, Christian, 2111 Seebarn (AT); Schladofsky, Werner, 1130 Wien (AT); Zimmermann, Gernot, 1130 Wien (AT)
(74) Vertreter: Samson & Partner

(56) Entgegenhaltungen:
- US-A- 5 200 688
- US-A- 5 289 103
- US-A- 5 351 283

## Beschreibung

Die Erfindung bezieht sich auf ein Verfahren zum Laden des Akkumulators eines schnurlosen Bedienhörers, dem eine Basisstation eines Autotelefonsystems in einem Fahrzeug zugeordnet ist, wobei der Bedienhörer in zumindest einer, mit dem System verbundenen Ladeschale ablegbar ist.

Ebenso bezieht sich die Erfindung auf ein Autotelefonsystem für ein Fahrzeug, mit einer an das System angeschlossenen Basisstation zumindest eines schnurlosen Bedienhörers und mit einer Ladeschale, in welcher der darin abgelegte Bedienhörer über Kontakte einer Kontaktschnittstelle mit einer Ladespannung versorgbar ist.

Fahrzeuge mit einem Autotelefonsystem sind oft mit Freisprecheinrichtungen ausgestattet, welche es dem Fahrer gestatten, Telefonate zu führen, ohne die Hände hierzu benützen zu müssen. Auch ein Beifahrer kann auf diese Weise über die Freisprecheinrichtung telefonieren. Im Gegensatz zu einem Handy ist jedoch ein Autotelefonsystem fest eingebaut und meist mit anderer Elektronik integriert oder über einen Fahrzeugbus verbunden, z. B. mit einem Autoradio, einem Navigationssystem etc. Passagiere im Fond eines PKW können dann nicht mehr vernünftig über die Freisprechanlage telefonieren, ganz zu schweigen von Passagieren eines Reisebusses. Überdies ist es oft nicht erwünscht, dass alle übrigen Mitfahrer ein Gespräch mithören. In solchen Fällen kann man dem Autotelefon eine Basisstation eines Schnurlostelefons zuordnen, wobei das Schnurlostelefon, im folgenden "Bedienhörer" genannt, in einer Ladeschale abgelegt werden kann. Das Schnurlostelefon kann beispielsweise nach dem DECT-Standard arbeiten, das Autotelefonsystem hingegen beispielsweise nach dem GSM-Standard, dem UMTS-Standard od. dgl.

Während bei stationären Schnurlostelefonen in Haushalten oder Büros das Laden des Akkumulators im Bedienhörer problemlos ist, da es immer erfolgen kann, wenn der Bedienhörer in einer Ladeschale abgelegt ist, stellt das Laden in Zusammenhang mit einem Autotelefonsystem tatsächlich ein Problem dar. Wegen der Belastung der Autobatterie ist ein ständiges Laden bei abgeschaltetem Motor nicht möglich und die Fahrten sind oft zu kurz, um eine vollständige Ladung immer zu gewährleisten. Um auch annehmbare Gesprächszeiten sicherzustellen, müsste der Bedienhörer nach jeder Fahrt aus dem Auto genommen und in einer stationären Ladeschale aufgeladen werden. Diese Unbequemlichkeit würde aber ein Benutzer kaum in Kauf nehmen.

Dieses Problem ist beispielsweise der Druckschrift US 5,200,688 A zu entnehmen.

Es ist demnach eine Aufgabe der Erfindung, ein Verfahren zum Laden des Bedienteils bzw. ein entsprechendes Autotelefonsystem anzugeben, welches die angegebenen Nachteile vermeidet.

Diese Aufgabe wird mit einem Autotelefonsystem der eingangs angegebenen Art gelöst, bei welchem erfindungsgemäß nach Ausschalten des Systems bei in der Ladeschale abgelegtem Bedienhörer dieser den Ladezustand seines Akkumulators überprüft und sich abschaltet, falls der Ladezustand genügend ist, andererseits jedoch vor dem Abschalten ein einmaliges Vollladen durchführt.

Dank der Erfindung ist sichergestellt, dass ein Bedienhörer bzw. dessen Akkumulator nach Abschalten des Autotelefonsystems, im allgemeinen bei Verlassen des Autos, voll aufgeladen wird, darüber hinaus jedoch der Fahrzeugbatterie kein Strom mehr entnommen wird. Selbst wenn das Fahrzeug auch ein oder zwei Tage nicht benutzt wird, wird die Standbyzeit des Bedienhörers auch sofort nach Wiederinbetriebnahme des Fahrzeugs ein Benutzen des Bedienhörers ermöglichen, ohne dass der Fall einer wegen des Dauerladens des Akkumulators im Bedienhörer entladenen Autobatterie eintreten kann.

In Hinblick auf den Umstand, dass viele Akkumulatoren, z. B. NiCd- oder NiMH-Akkumulatoren nur innerhalb eines bestimmten Temperaturbereiches vollständig geladen werden können bzw. ein Laden außerhalb dieses Temperaturbereiches zu einer Zerstörung des Akkumulators führen kann, ist es zweckmäßig, dass die Temperatur der Umgebung und/oder des Bedienhörers überwacht wird und das einmalige Volladen nur durchgeführt wird, falls die überwachte Temperatur innerhalb eines vorgebbaren Bereiches liegt.

Um im Ladebetrieb nicht an eine bestimmte Bordspannung, meist 12 Volt, des Fahrzeuges gebunden zu sein, empfiehlt es sich, wenn die Ladespannung für den Akkumulator aus der Bordspannung des Fahrzeuges über einen Gleichspannungs/Gleichspannungswandler erzeugt wird, welcher über ein Steuersignal (s_{z}, sₛ) ein- bzw. ausschaltbar ist.

Die vorliegende Aufgabe wird auch mit einem Autotelefonsystem der oben genannten Art gelöst, bei welchem erfindungsgemäß die Kontaktschnittstelle zumindest einen Steuerkontakt für ein den Betriebszustand des Systems repräsentierendes Zustandsignal besitzt, der Bedienhörer zur Überprüfung des Ladezustandes seines Akkumulators sowie zur Ladesteuerung eingerichtet ist, sowie dazu, sich bei Feststellen eines Abschaltzustandes des Autotelefonsystems an dem Steuerkontakt nach Ablegen des Bedienhörers in die Ladeschale und genügendem Ladezustand abzuschalten, sich anderenfalls erst nach einem einmaligen Vollladen des Akkumulators abzuschalten.

Bei einer zweckmäßigen Variante des Autotelefonsystems, dessen Vorteile bereits im Zusammenhang mit dem Verfahren erwähnt wurden, ist vorgesehen, dass ein Gleichspannungs/Gleichspannungswandler zur Erzeugung der Ladespannung für den Akkumulator des Bedienhörers aus der Bordspannung des Fahrzeuges vorgesehen ist.

Weiters ist es zweckmäßig, wenn der Bedienhörer dazu eingerichtet ist, über den Steuerkontakt Steuersignale abzugeben. Dadurch können Funktionen in der Ladeschale oder dem Autotelefonsystem beeinflusst werden. Besonders günstig ist es dabei, wenn der Wandler über den Steuerkontakt der Kontaktschnittstelle geführte Steuersignale ein- bzw. ausschaltbar ist. Auf diese Weise lässt sich das nach dem einmaligen Vollladen erforderliche Abschalten wirkungsvoll durchführen.

Auch ist es aus den bereits erwähnten Gründen vorteilhaft, wenn ein Temperatursensor zur Überwachung der Temperatur der Umgebung und/oder des Bedienhörers vorgesehen ist, wobei letzterer dazu eingerichtet ist, das einmalige Vollladen nur durchzuführen, falls die überwachte Temperatur innerhalb eines vorgebbaren Bereiches liegt.

Für eine, insbesondere dem Betrieb in einem Auto angepasste Steuerung der Hintergrundbeleuchtung ist es günstig, falls die Kontaktschnittstelle zumindest einen Lichtsteuerkontakt für die Steuerung einer Hintergrundbeleuchtung des Bedienhörers aufweist.

Die Erfindung samt weiterer Vorteile ist im folgenden an Hand beispielsweiser Ausführungsformen näher erläutert, die in der Zeichnung veranschaulicht sind. In dieser zeigen:
Fig. 1 ein prinzipielles Blockschaltbild eines Autotelefonsystems nach der Erfindung,
Fig. 2 gleichfalls in einem Blockschaltbild eine Ladeschale des Systems mit daran über eine Schnittstelle angeschlossenem Bedienhörer, und
Fig. 3 eine Ausführungsmöglichkeit des Verfahrens nach der Erfindung in einem Ablaufdiagramm.

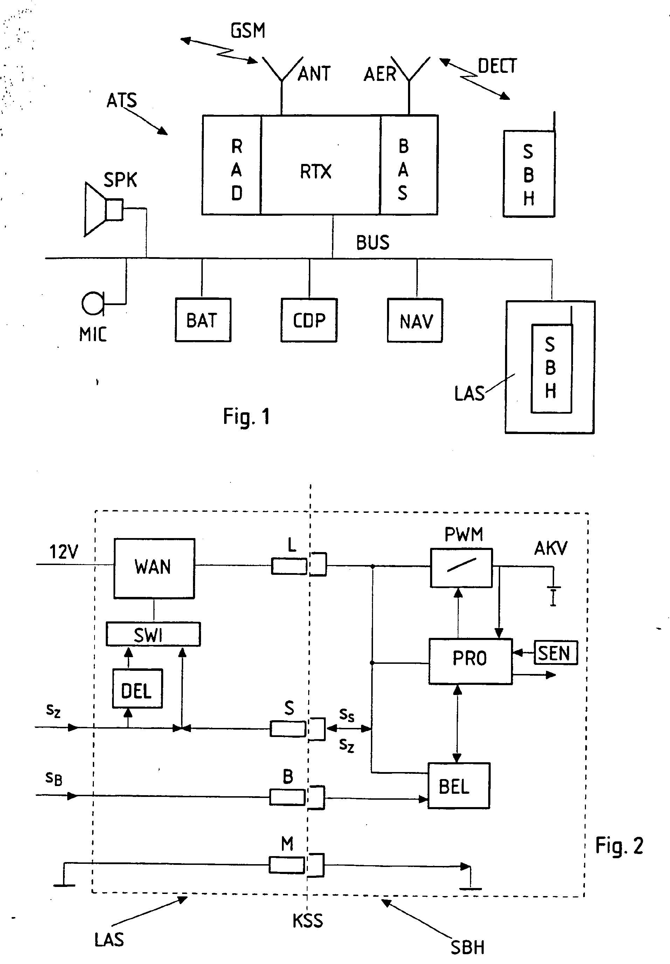

Gemäß Fig. 1 weist ein Autotelefonsystem ATS nach der Erfindung einen Sendeempfänger RTX auf, der beispielsweise nach dem GSM-System arbeitet. Über eine Außenantenne ANT wird der Verkehr mit einer ausgewählten Basisstation entsprechend der jeweiligen geographischen Lage aufrechterhalten. Das System ATS besitzt weiters eine Basisstation BAS eines Schnurlossystems, welches beispielsweise nach dem DECT-System arbeitet, wobei über eine Antenne AER der Basisstation der Verkehr mit einem Bedienhörer SBH - oder auch mit mehreren - aufrecht erhalten werden kann. Schnurlostelefonsysteme und deren Komponenten sind dem Fachmann in vielen Varianten bekannt und müssen hier nicht näher erläutert werden.

Über einen Autobus BUS ist der Sendeempfänger RTX, dem auch ein übliches Rundfunkgerät RAD angegliedert sein kann, an weitere Komponenten angeschlossen, z. B. an einen Lautsprecher SPK und ein Mikrophon MIC einer Freisprechanlage, an die Fahrzeugbatterie BAT, gegebenenfalls an ein Navigationssystem NAV, einen CD-Player CDP und an zumindest eine Ladeschale LAS.

Wie aus Fig. 2 näher hervorgeht, besitzt die Ladeschale LAS eine Kontaktschnittstelle KSS zu einem in der Ladeschale abgelegten Bedienhörer SBH, nämlich einen Massekontakt M, einen Lichtsteuerkontakt B, einen Steuerkontakt S und einen Ladespannungskontakt L. Die Kontakte M, B, S, L sind an Ladeschale LAS und schnurlosem Bedienhörer SBH als metallische, gegebenenfalls federnde Kontaktteile in bekannter Weise so ausgebildet, dass bei in der Ladeschale LAS abgelegtem oder eingestecktem Bedienhörer SBH eine verlässliche Kontaktierung erfolgt.

In der Ladeschale LAS ist eine Gleichspannungs/Gleichspannungswandler WAN enthalten, welcher die Bordspannung von z. B. 12 Volt in eine an dem Kontakt L zur Verfügung stehende Ladespannung von z. B. 6 Volt wandelt. Der Wandler WAN wird über einen gesteuerten Schalter SWI, ein bzw. ausgeschaltet, welcher seine Steuersignale entweder seitens des Telefonsystems als über ein Verzögerungselement DEL geführtes Zustandssignal s_{z} oder als Steuersignal sₛ seitens des Bedienhörers SBH erhält. Über den Lichtsteuerkontakt B kann dem Bedienhörer SBH z. B. ein Leuchtdichtesignal s_{B} zugeführt werden, dessen Frequenz ein Maß für die Leuchtdichte der Hintergrundbeleuchtung des Bedienhörers SBH ist.

In dem schurlosen Bedienhörer SBH kann das Laden des Akkumulators AKU aus der Ladespannung in bekannter Weise über einen Pulsweitenmodulator PWM erfolgen, dessen Funktion seitens z. B. eines Mikroprozessors PRO gesteuert wird. Der Ladezustand des Akkumulators AKU wird in dem Bedienhörer SBH ständig überwacht und dem Fachmann sind eigene Ladealgorithmen bekannt, die ein Nachladen oder Erhaltungsladen in optimaler Weise, dem jeweiligen Akkumulatorentyp angepasst, ermöglichen. Wie weiter unten noch näher erläutert, kann das Laden auch unter Berücksichtigung der Temperatur des Akkumulators erfolgen. Daher ist hier auch ein Temperatursensor SEN vorgesehen, der dem steuernden Prozessor PRO eine Information hinsichtlich der Umgebungs- bzw. der Akkumulatorentemperatur liefert. Einer Beleuchtungseinheit BEL, die auch von dem Prozessor PRO angesteuert ist, ist das bereits erwähnte Leuchtdichtesignal s_{B} über den Kontakt B zugeführt.

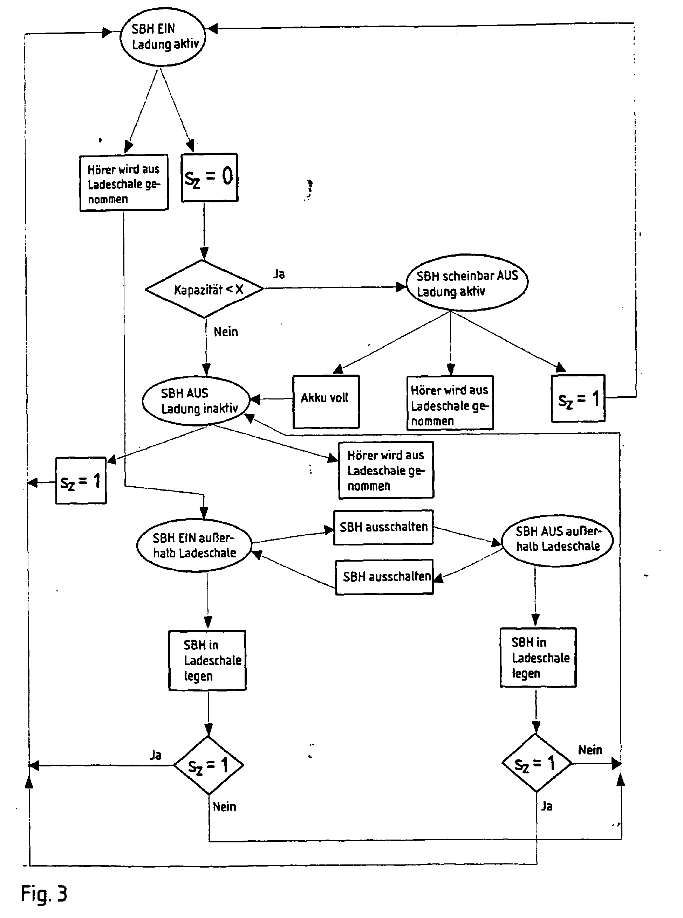

Die Funktion des erfindungsgemäßen Autotelefonsystems bzw. des dabei angewandten Verfahrens sei nun unter ergänzender Bezugnahme auf Fig. 3 genauer erläutert. Bei eingeschaltetem System - das Zustandssignal s_{z} ist dann "1" - und in der Ladeschale LAS liegendem Bedienhörer SBH ist die Ladung des Akkumulators AKU aktiv (Fig. 3, ganz oben). Wird das System ausgeschaltet, z. B. durch Abziehen des Zündschlüssels, geht das Zustandssignal s_{z} auf "0". Der Hörer SBH, der in der Ladeschale LAS liegt, kennt die Kapazität seines Akkumulators. An sich würde wegen s_{z} = 0 der Wandler WAN ausgeschaltet, doch ist hier eine Verzögerung durch die Einheit DEL vorgesehen. Falls der Hörer SBH innerhalb von z. B. 500ms ein Signal sₛ = 1 abgibt, wird das Ausschalten des Wandlers WAN durch das Zustandssignal s_{z} = 1 verhindert. Ist die Kapazität somit kleiner als ein Sollwert, so wird der Akkumulator AKU geladen; nach außen hin ist der Bedienhörer SBH scheinbar ausgeschaltet, z. B. leuchtet seine Hintergrundbeleuchtung nicht. Sobald der Akkumulator AKU vollgeladen ist, gibt der Hörer SBH bzw. sein Prozessor PRO ein Steuersignal sₛ = 0 an die Ladeschale LAS bzw. deren Schalter SWI und der Wandler WAN wird abgeschaltet. Weder die Ladeschale LAS noch der Hörer SBH entnehmen nun der Fahrzeugbatterie Strom.

Es ist ersichtlich, dass die Schnittstelle KSS hinsichtlich ihres Kontaktes S bidirektional ist, denn einerseits kann durch das Zustandssignal s_{z} = 1 der Hörer SBH eingeschaltet ("aufgeweckt") werden, andererseits kann aber der Hörer über diesen Kontakt mittels des Steuersignals sₛ den Wandler WAN ein- oder ausschalten.

Wie bereits weiter oben erwähnt wurde, kann vor dem Laden jeweils eine Abfrage durchgeführt werden, ob ein gültiger Temperaturbereich vorliegt, d.h. ob die Akkumulatorentemperatur ϑ oder, vereinfacht die Umgebungstemperatur in einem erlaubten Temperaturbereich liegt, somit ob ϑₘᵢₙ < ϑ < ϑ gilt. Um das Ablaufdiagramm der Fig. 3 nicht zu unübersichtlich zu gestalten, ist dort das Ladekriterium "Temperatur" nicht behandelt.

In Fig. 3 sind noch die anderen Möglichkeiten eines Ablaufes dargestellt und für den Fachmann auch ohne eingehende Erläuterung klargemacht. Beispielsweise kann der Hörer während des Ladens aus der Ladeschale genommen werden, wobei zu unterscheiden ist, ob es sich um ein Laden bei eingeschaltetem System mit s_{z} = 1 oder bei abgeschaltetem System mit s_{z} = 0 handelt.

Die angesprochene Hintergrundbeleuchtung erhält ihre Versorgungsspannung gleichfalls von dem Kontakt L der Ladespannung. Wenn das System eingeschaltet ist und der Bedienhörer SBH in der Ladeschale LAS liegt, leuchtet auch die Hintergrundbeleuchtung. Sie wird über das Leuchtdichtesignal s_{B} gedimmt. Bei Abschalten des Systems verschwindet das Signal s_{B} und die Beleuchtung erlischt. Nach Herausnehmen des Hörers SBH aus der Ladeschale LAS oder nach einem Druck auf eine der Tasten des Hörers geht die Hintergrundbeleuchtung für eine bestimmte Zeit, z. B. 5s an. Eine solche Steuerung, die über den Prozessor PRO bzw. die Beleuchtungseinheit BEL erfolgt, ist dem Fachmann bekannt.

## Patentansprüche

1. Verfahren zum Laden des Akkumulators (AKU) eines schnurlosen Bedienhörers (SBH), dem eine Basisstation (BAS) eines Autotelefonsystems (ATS) in einem Fahrzeug zugeordnet ist, wobei der Bedienhörer in zumindest einer, mit dem System verbundenen Ladeschale (LAS) ablegbar ist,
**dadurch gekennzeichnet, dass**
nach Ausschalten des Systems (ATS) bei in der Ladeschale (LAS) abgelegtem Bedienhörer (BDH) dieser den Ladezustand seines Akkumulators (AKU) überprüft und sich abschaltet, falls der Ladezustand genügend ist, jedoch anderenfalls vor dem Abschalten ein einmaliges Vollladen durchführt.

2. Verfahren nach Anspruch 1, **dadurch gekennzeichnet, dass** die Temperatur der Umgebung und/oder des Bedienhörers (BDH) überwacht wird und das einmalige Volladen nur durchgeführt wird, falls die überwachte Temperatur innerhalb eines vorgebbaren Bereiches liegt.

3. Verfahren nach Anspruch 1 oder 2, **dadurch gekennzeichnet, dass** die Ladespannung für den Akkumulator (AKU) aus der Bordspannung des Fahrzeuges über einen Gleichspannungs/Gleichspannungswandler (WAN) erzeugt wird, welcher über ein Steuersignal (s_{z}, sₛ) ein- bzw. ausschaltbar ist.

4. Autotelefonsystem (ATS) für ein Fahrzeug, mit einer an das System angeschlossenen Basisstation (BAS) zumindest eines schnurlosen Bedienhörers (SBH) und mit einer Ladeschale (LAS), in welcher der darin abgelegte Bedienhörer über Kontakte (M, L) einer Kontaktschnittstelle (KSS) mit einer Ladespannung versorgbar ist,
**dadurch gekennzeichnet, dass**
die Kontaktschnittstelle (KSS) zumindest einen Steuerkontakt (S)für ein den Betriebszustand des Systems repräsentierendes Zustandsignal (s_{z}) besitzt, der Bedienhörer (BDH) zur Überprüfung des Ladezustandes seines Akkumulators (AKU) sowie zur Ladesteuerung eingerichtet ist, sowie dazu, sich bei Feststellen eines Abschaltzustandes des Autotelefonsystems (ATS) an dem Steuerkontakt nach Ablegen des Bedienhörers in die Ladeschale (LAS) und genügendem Ladezustand abzuschalten, sich anderenfalls erst nach einem einmaligen Vollladen des Akkumulators abzuschalten.

5. Autotelefonsystem (ATS) nach Anspruch 4, **dadurch gekennzeichnet, dass** ein Gleichspannungs/Gleichspannungswandler (WAN) zur Erzeugung der Ladespannung für den Akkumulator (AKU) des Bedienhörers (BDH) aus der Bordspannung des Fahrzeuges vorgesehen ist.

6. Autotelefonsystem (ATS) nach Anspruch 4 oder 5, **dadurch gekennzeichnet, dass** der Bedienhörer (BDH) dazu eingerichtet ist, über den Steuerkontakt (S) Steuersignale (sₛ) abzugeben.

7. Autotelefonsystem (ATS) nach Anspruch 5 und 6, **dadurch gekennzeichnet, dass** der Wandler (WAN) über den Steuerkontakt (S) der Kontaktschnittstelle (KSS) geführte Steuersignale (sₛ) ein- bzw. ausschaltbar ist.

8. Autotelefonsystem (ATS) nach einem der Ansprüche 4 bis 7, **dadurch gekennzeichnet, dass** ein Temperatursensor (SEN) zur Überwachung der Temperatur ϑ der Umgebung und/oder des Bedienhörers (BDH) vorgesehen ist, wobei letzterer dazu eingerichtet ist, das einmalige Vollladen nur durchzuführen, falls die überwachte Temperatur innerhalb eines vorgebbaren Bereiches (ϑₘᵢₙiϑₘₐₓ) liegt.

9. Autotelefonsystem (ATS) nach einem der Ansprüche 4 bis 8, **dadurch gekennzeichnet, dass** die Kontaktschnittstelle (KSS) zumindest einen Lichtsteuerkontakt (B) für die Steuerung einer Hintergrundbeleuchtung des Bedienhörers (BDH)aufweist.

## Claims

1. A method of charging an accumulator (AKU) of a cordless handset (SBH), with which a base station (BAS) of a car telephone system (ATS) in a vehicle is associated, wherein the handset is adapted to be supported in at least one charging tray (LAS) connected to the system,
**characterized in that**
after switching off the system (ATS), with the handset (BDH) supported in the charging tray (LAS), the handset (BDH) checks the charging state of its accumulator (AKU) and switches off itself if the charging state is sufficient, otherwise, however, perfoms a single complete charge cycle before the switch off.

2. The method of claim 1, **characterized in that** the temperature of the environment and/or the handset (BDH) is monitored and the single complete charge cycle is only performed if the monitored temperature is within a predeterminable range.

3. The method of claim 1 or 2, **characterized in that** the charging voltage for the accumulator (AKU) is generated from the on-board voltage of the vehicle via a direct-current-voltage/direct-current-voltage converter (WAN) which can be switched on and off, respectively, via a control signal (s_{z}, sₛ).

4. A car telephone system (ATS) for a vehicle, comprising a base station (BAS) connected to the system of at least one cordless handset (SBH) and a charging tray (LAS), in which the handset supported therein is adapted to be supplied with a charging voltage via contacts (M, L) of a contact interface (KSS),
**characterized in that**
the contact interface (KSS) has at least one control contact (S) for a state signal (s_{z}) representing the operating state of the system, the handset (BDH) is adapted to check the charging state of its accumulator (AKU) and to control charging, as well as to switch off itself upon determining a switch off state of the car telephone system (ATS) at the control contact after supporting the handset in the charging tray (LAS) and a sufficient charging state, otherwise to switch off itself only after a single complete charge cycle of the accumulator.

5. The car telephone system (ATS) of claim 4, **characterized in that** a direct-current-voltage/direct-current-voltage converter (WAN) is provided for generation of the charging voltage for the accumulator (AKU) of the handset (BDH) from the on-board voltage of the vehicle.

6. The car telephone system (ATS) of claim 4 or 5, **characterized in that** the handset (BDH) is adapted to output control signals (sₛ) via the control contact (S).

7. The car telephone system (ATS) of claim 5 and 6, **characterized in that** the converter (WAN) is adapted to be switched on and off, respectively, by the control signals (sₛ) directed via the control contact (S) of the contact interface (KSS).

8. The car telephone system (ATS) of one of claims 4 to 7, **characterized in that** a temperature sensor (SEN) is provided for monitoring the temperature ϑ of the environment and/or of the handset (BDH), wherein the latter is adapted to perform the single complete charge cycle only if the monitored temperature is within a predeterminable range (ϑ min; ϑ max).

9. The car telephone system (ATS) of one of claims 4 to 8, **characterized in that** the contact interface (KSS) has at least one light control contact (B) for the control of a background illumination of the handset (BDH).

## Revendications

1. Procédé de charger un accumulateur (AKU) d'un écouteur sans fil (SBH), auquel est associé une station de base (BAS) d'un système de téléphone de voiture (ATS) dans un véhicule, l'écouteur étant agencé à être supporté dans au moins un bouclier de chargement (LAS) connecté au système,
**caractérisé en ce qu'**
après la déconnexion du système (ATS), lors d'un écouteur (BDH) supporté dans le bouclier de chargement (LAS), l'écouteur (BDH) vérifie l'état de chargement de son accumulateur (AKU) et se déconnecte, si l'état de chargement est suffisant, sinon, cependant, effectue un cycle de chargement complet unique avant la déconnexion.

2. Procédé selon la revendication 1, **caractérisé en ce que** la température de l'environnement et/ou de l'écouteur (BDH) est surveillée et le cycle de chargement complet unique est seulement effectué si la température surveillée se situe dans une plage prédéterminable.

3. Procédé selon la revendication 1 ou 2, **caractérisé en ce que** la tension de chargement pour l'accumulateur (AKU) est générée à partir de la tension de bord du véhicule via un convertisseur continu/continu (WAN) qui est connectable et déconnectable, respectivement, via un signal de commande (s_{z}, sₛ).

4. Système de téléphone de voiture (ATS) pour un véhicule, comprenant une station de base (BAS) connectée au système d'au moins un écouteur sans fil (SBH) et un bouclier de chargement (LAS), dans lequel l'écouteur supporté dans celui-ci est agencé à être alimenté par des contacts (M, L) de l'interface de contact (KSS) avec une tension de chargement,
**caractérisé en ce que**
l'interface de contact (KSS) comporte au moins un contact de commande (S) pour un signal d'état (s_{z}) représentant l'état d'opération du système, l'écouteur (BDH) est agencé à vérifier l'état de chargement de son accumulateur (AKU) et à commander le chargement, ainsi qu' à se déconnecter lors de la détermination d'un état de déconnexion du système de téléphone de voiture (ATS) par le contact de commande après supporter l'écouteur dans le bouclier de chargement (LAS) et un état de chargement suffisant, sinon à se déconnecter seulement après un cycle de chargement complet unique de l'accumulateur.

5. Système de téléphone de voiture (ATS) selon la revendication 4, **caractérisé en ce qu'**un convertisseur continu/continu (WAN) est prévu pour générer la tension de chargement pour l'accumulateur (AKU) de l'écouteur (BDH) à partir de la tension de bord du véhicule.

6. Système de téléphone de voiture (ATS) selon la revendication 4 ou 5, **caractérisé en ce que** l'écouteur (BDH) est agencé à donner des signaux de commande (sₛ) via le contact (S) de commande.

7. Système de téléphone de voiture (ATS) selon la revendication 5 ou 6, **caractérisé en ce que** le convertisseur (WAN) est connectable et déconnectable, respectivement, par des signaux de commande (sₛ) dirigés via le contact de commande (S) de l'interface de contact (KSS).

8. Système de téléphone de voiture (ATS) selon l'une des revendications 4 à 7, **caractérisé en ce qu'**un capteur de température (SEN) est prévu pour surveiller la température ϑ de l'environnement et/ou de l'écouteur (BDH), le dernier mentionné étant adapté à seulement effectuer le cycle de chargement complet unique, si la température surveillée se situe dans la plage prédéterminable (ϑ ₘᵢₙ; ϑ ₘₐₓ).

9. Système de téléphone de voiture (ATS) selon l'une des revendications 4 à 8, **caractérisé en ce que** l'interface de contact (KSS) comporte au moins un contact (B) de commande de lumière pour la commande de l'illumination de l'arrière-plan de l'écouteur (BDH).
